(19) Europäisches Patentamt
European Patent Office
Office européen des brevets

(11) Veröffentlichungsnummer: **0 029 412**
**A2**

(12) **EUROPÄISCHE PATENTANMELDUNG**

(21) Anmeldenummer: **80810350.1**

(22) Anmeldetag: **13.11.80**

(51) Int. Cl.³: **C 09 B 23/14**, G 03 C 1/84

(30) Priorität: **19.11.79 GB 7939970**

(43) Veröffentlichungstag der Anmeldung: **27.05.81**
**Patentblatt 81/21**

(84) Benannte Vertragsstaaten: **BE CH DE FR GB IT LI**

(71) Anmelder: **CIBA-GEIGY AG, Patentabteilung Postfach, CH-4002 Basel (CH)**

(72) Erfinder: **Postle, Stephen Roderick, Springdale 29 Goodwood Avenue, Hutton, Brentwood Essex CM13 1QD (GB)**

(54) **Bleichbare Farbstoffe, Verfahren zu ihrer Herstellung und ihre Verwendung in photographischem Material.**

(57) Farbstoffe der Formel

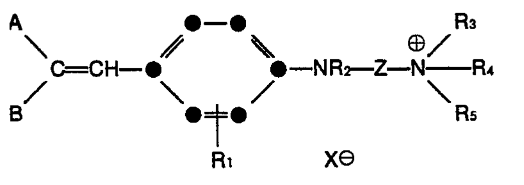

worin A und B je Cyano, Acyl oder Carbalkoxy sind, wobei B nicht Cyano oder Carbalkoxy sein darf, wenn A Cyano ist, oder A und B zusammen mit dem Kohlenstoffatom, an das sie gebunden sind, ein carbocyclisches oder heterocyclisches Ringsystem bilden, $R_1$ Wasserstoff, Alkyl oder Alkoxy und $R_2$ Alkyl ist, $R_3$, $R_4$ und $R_5$ je Wasserstoff, Alkyl, Carboxyalkyl, Alkoxycarbonylalkyl oder Aryl sind oder zwei der Substituenten $R_3$, $R_4$ und $R_5$ oder alle drei Substituenten $R_3$, $R_4$ und $R_5$ zusammen mit dem Stickstoffatom, an das sie gebunden sind, ein Ringsystem bilden können, Z ein Brückenglied und X⊖ ein Anion ist.

Die Farbstoffe lassen sich leicht bleichen und sind als Antihalo- oder Filterfarbstoffe in photographischen Materialien geeignet.

EP 0 029 412 A2

CIBA-GEIGY AG 8-12606/+

Basel (Schweiz)

Bleichbare Farbstoffe, Verfahren zu ihrer Herstellung und ihre Verwendung in photographischem Material

Die vorliegende Erfindung betrifft neuartige Farbstoffe sowie deren Verwendung in photographischem Material.

Gegenstand der vorliegenden Erfindung sind Farbstoffe der Formel

(1) 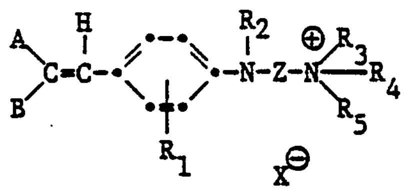 ,

worin A und B je -CN, $-COR_6$ oder $-CO_2R_7$ sind, wobei $R_6$ Aryl und $R_7$ Alkyl mit 1 bis 4 Kohlenstoffatomen bedeuten, wobei B nicht $-CO_2R_7$ oder -CN sein darf, wenn A -CN ist, oder A und B zusammen mit dem Kohlenstoffatom, an das sie gebunden sind, ein gegebenenfalls substituiertes carbocyclisches oder heterocyclisches Ringsystem bilden, $R_1$ Wasserstoff, Alkyl oder Alkoxy mit je 1 bis 4 Kohlenstoffatomen und $R_2$ gegebenenfalls substituiertes Alkyl mit 1 bis 4 Kohlenstoffatomen ist, $R_3$, $R_4$ und $R_5$ je Wasserstoff, Alkyl mit 1 bis 4 Kohlenstoffatomen, Carboxyalkyl, Alkoxycarbonylalkyl oder Aryl sind oder zwei der Substituenten $R_3$, $R_4$ und $R_5$ oder alle drei Substituenten $R_3$, $R_4$ und $R_5$ mit dem Stickstoffatom, an das sie gebunden sind, ein Ringsystem bilden, Z ein Brückenglied der Formel $-(CHR_8)_m-(CH_2)_n-$, worin $R_8$ Wasserstoff oder Methyl, m 0 oder 1, n 1, 2 oder 3, und $X^{\ominus}$ ein Anion ist.

Die Substituenten A und B bilden mit dem Kohlenstoffatom, an das sie gebunden sind, 5- oder 6-gliedrige, gesättigte oder ungesättigte carbocyclische Ringsysteme, die gegebenenfalls mit einem Benzolring kondensiert sind und die mindestens eine Ketogruppe enthalten. Ferner bilden die Substituenten A und B mit dem Kohlenstoffatom, an das sie gebunden sind, heterocyclische Ringsysteme. Vorzugsweise sind dies 5- oder 6-gliedrige, gesättigte oder ungesättigte Ringe, die 1 oder 2 Heteroatome wie z.B. Stickstoff- oder Schwefelatome enthalten, gegebenenfalls mit einem Benzolring kondensiert sind sowie mindestens eine Ketogruppe aufweisen. Die Bildung gesättigter oder ungesättigter bicyclischer Ringsysteme mit 8 bis 10 Ringatomen kommt ebenfalls in Betracht. Mindestens zwei dieser Atome sind Heteroatome wie z.B. Stickstoff- oder Schwefelatome. Das bicyclische System enthält mindestens 2 Ketogruppen.

Bevorzugte Farbstoffklassen der Formel (1) sind solche, worin A, B und das Kohlenstoffatom, an das sie gebunden sind, eines der folgenden Ringsysteme darstellen:

a) 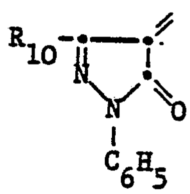

b) 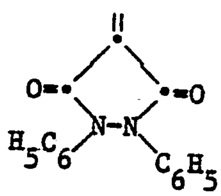

c) 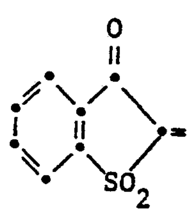

d) 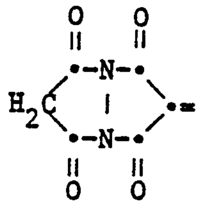

e) 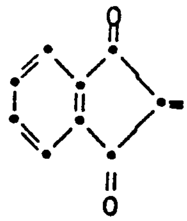

wobei $R_{10}$ in Formel a) Wasserstoff oder Methyl ist.

Besonders bevorzugt sind A, B und das Kohlenstoffatom, an das sie gebunden sind, ein Indan-1,3-dion- oder ein $\Delta^2$-Pyrazolonrest.

A und B sind je -CN, $-COR_6$ oder $-CO_2R_7$. Dabei kann $R_6$ Aryl wie z.B. Phenyl oder Naphthyl, gegebenenfalls mit Halogen, vorzugsweise Chlor oder Brom, substituiertes Niederalkyl ($C_1$-$C_4$), vorzugsweise Methyl oder Aethyl, oder Alkoxy wie z.B. Methoxy, Aethoxy oder Butoxy sein. Besonders bevorzugt ist $R_6$ Phenyl. $R_7$ ist Alkyl, z.B. Methyl, Aethyl, Propyl oder Butyl. Gegebenenfalls ist $R_7$ mit Methoxy oder Chlor substituiert. Bedeutet A -CN, so darf B nicht $-CO_2R_7$ oder -CN sein.

Bevorzugte Farbstoffe der Formel (1) sind solche, in denen A -CN und B $-COR_6$ ist, wobei $R_6$ die oben angegebenen Bedeutungen haben kann.

Ein Ringsystem, das $R_3$, $R_4$ und $R_5$ sowie das Stickstoffatom, an das sie gebunden sind, umfasst, ist entweder ein bicyclisches oder ein ungesättigtes System. Diese Ringsysteme, die mit Methyl- oder Aethylgruppen weitersubstituiert sein können, enthalten gegebenenfalls mindestens ein Heteroatom wie z.B. ein Stickstoff-, Sauerstoff- oder Schwefelatom. Sauerstoff ist bevorzugt.

Ferner besteht die Möglichkeit, dass nur zwei der Substituenten $R_3$, $R_4$ und $R_5$ zusammen mit dem Stickstoffatom, an das sie gebunden sind, ein cyclisches System bilden. Dieses gesättigte oder ungesättigte System enthält gegebenenfalls mindestens ein Heteroatom wie z.B. ein Stickstoff-, Sauerstoff- oder Schwefelatom. Sauerstoff ist bevorzugt.

Beispiele für Ringsysteme, die alle Substituenten $R_3$, $R_4$ und $R_5$ oder nur zwei der Substituenten $R_3$, $R_4$ und $R_5$ mit dem Stickstoffatom, mit dem sie verknüpft sind, umfassen, sind:

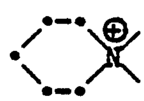
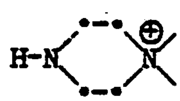
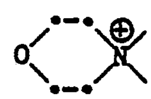
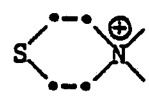

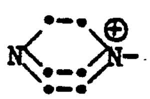
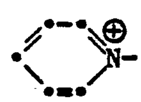

Diese Ringe können mit Methyl- oder Aethylgruppen substituiert sein. Vorzugsweise ergänzen sich $R_3$, $R_4$ und $R_5$ zusammen mit dem Stickstoffatom zu einem Pyridiniumring.

$R_3$, $R_4$ und $R_5$ sind je Wasserstoff oder Alkyl mit 1 bis 4 Kohlenstoffatomen, z.B. Methyl, Aethyl, n-Propyl, i-Propyl, n-Butyl, i-Butyl oder t-Butyl. Wasserstoff, Methyl, Aethyl und i-Propyl werden bevorzugt.

Ferner bedeuten $R_3$, $R_4$ und $R_5$ Carboxyalkyl, worin der Alkylteil 1 bis 4 Kohlenstoffatome enthält. Carboxymethyl und Carboxyäthyl werden bevorzugt.

Stellen $R_3$, $R_4$ und $R_5$ eine Alkoxycarbonylalkylgruppe dar, so enthalten sowohl der Alkoxy- als auch der Alkylrest 1 bis 4 Kohlenstoffatome. Geeignete Gruppen sind Methoxy- bzw. Aethoxycarbonylmethyl bzw. -äthyl.

$R_3$,$R_4$ und $R_5$ sind je Aryl, z.B.Phenyl oder Naphthyl. Diese Reste können mit Alkyl oder Alkoxy mit jeweils 1 bis 4 Kohlenstoffatomen oder mit Halogen weitersubstituiert sein.

Ein bevorzugter Rest ist Phenyl; diser kann mit Methyl oder Brom substituiert sein.

$R_1$ ist Wasserstoff oder Alkyl mit 1 bis 4 Kohlenstoffatomen. Diese Alkylgruppen, z.B. Methyl, Aethyl, n-Propyl, i-Propyl, n-Butyl und i-Butyl, sind gegebenenfalls durch Halogen, wie z.B. Brom oder Chlor, Methoxy, Cyano oder Nitro weitersubstituiert. Ferner bezeichnet $R_1$ solche Alkoxyreste, die den oben definierten Alkylgruppen, einschliesslich der Substituenten, entsprechen.

Vorzugsweise ist $R_1$ Wasserstoff, Methyl, Aethyl und Methoxy. Wasserstoff wird als $R_1$ besonders bevorzugt.

$R_2$ ist Alkyl mit 1 bis 4 Kohlenstoffatomen, z.B. Methyl, Aethyl, Propyl oder Butyl. Diese Reste können mit Chlor, Brom oder Methoxy substituiert sein. Vorzugsweise ist $R_2$ Methyl oder Aethyl. Ferner ist $R_3$ besonders bevorzugt Wasserstoff oder Methyl und $R_4$ und $R_5$ sind je Aethyl.

Z ist ein Brückenglied vom Alkylentyp, z.B. Methylen, Aethylen, Propylen, Butylen, Pentylen oder i-Pentylen. Vorzugsweise steht Z für Methylen oder Aethylen. Besonders bevorzugt ist Z Aethylen.

$X^{\ominus}$ ist ein Halogenidion wie Chlorid oder Bromid. Ferner ist $X^{\ominus}$ ein Alkylsulfat, vorzugsweise Methylsulfat.

Verbindungen der Formel (1) lassen sich dadurch herstellen, dass man eine eine aktive Methylengruppe enthaltende Verbindung der Formel $A-CH_2-B$, worin A und B die oben angegebenen Bedeutungen haben, in einem polaren Lösungsmittel unter Rückfluss mit einem Benzaldehyd der allgemeinen Formel

(2) 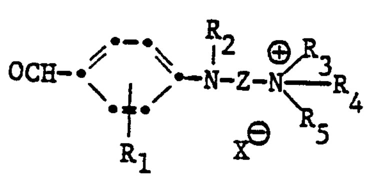

kocht, worin $R_1$, $R_2$, $R_3$, $R_4$, $R_5$, Z und $X^{\ominus}$ die oben angegebenen Bedeutungen haben.

Als polares Lösungsmittel eignet sich beispielsweise Essigsäure.

Wenn $R_3$ Wasserstoff ist, so kann man einen Benzaldehyd der allgemeinen Formel

(3) 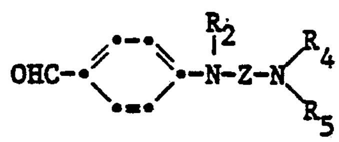

verwenden, worin $R_1$, $R_2$, $R_4$, $R_5$ und Z die oben angegebenen Bedeutungen haben. $H^{\oplus}X^{\ominus}$, worin $X^{\ominus}$ die oben angegebenen Bedeutungen hat, kann dann während der Reinigung unter Bildung der Verbindung der Formel (1) addiert werden.

Die Benzaldehyde der Formel (2) und (3) lassen sich nach bekannten Methoden herstellen, beispielsweise unter Verwendung eines substituierten Anilins nach Gleichung

(a) 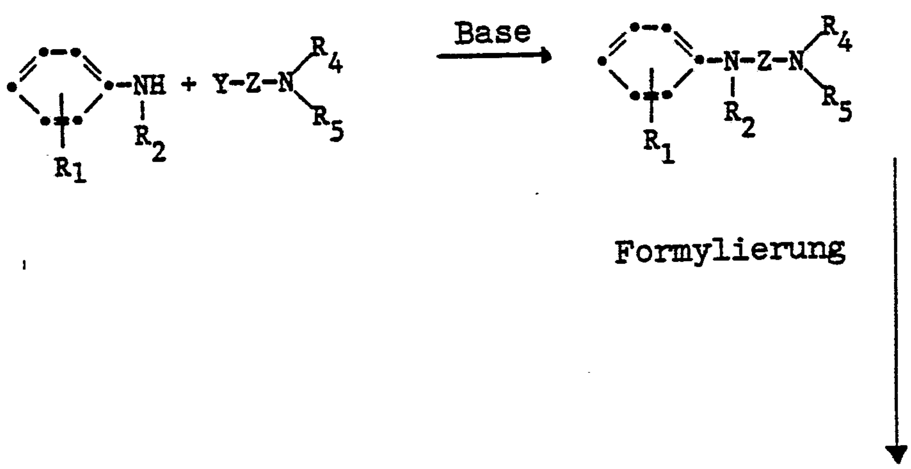

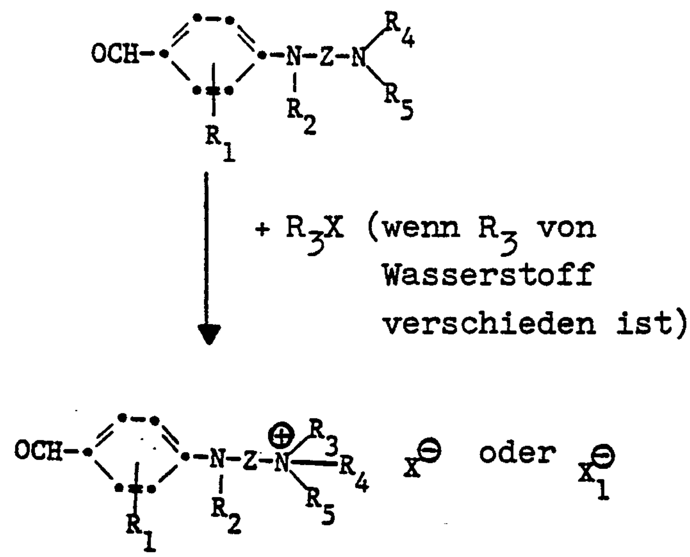


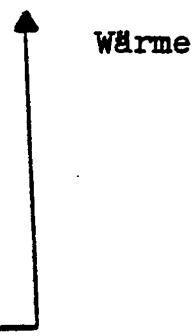


oder unter Verwendung eines Trialkylamins nach der Gleichung

(b) 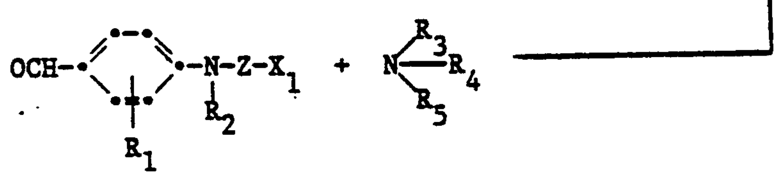

wobei im obigen Schema $R_1$, $R_2$, $R_3$, $R_4$, $R_5$, Z und $X^{\ominus}$ die oben angegebenen Bedeutungen haben, Y eine Abgangsgruppe und $X_1$ Halogen wie z.B. Chlor oder Brom ist.

Ein geeignetes Formylierungsverfahren ist dasjenige nach Vilsmeier und Haak, wie in der U.S. Patentschrift 2 141 090 und in "Berichte der Deutschen Chemischen Gesellschaft" 1928, 60, 119 beschrieben.

Der Weg (b) ist in den U.S. Patentschriften 3 141 018 und 3 247 215 beschrieben.

Die erfindungsgemässen Farbstoffe werden in lichtempfindlichem Material als Antihalofarbstoffe, Filterfarbstoffe und Schirmfarbstoffe verwendet.

Nach der Verarbeitung von belichteten photographischen Materialien ist ihre Gegenwart in diesen Materialien nicht mehr erforderlich.

Die erfindungemässen Farbstoffe sind für solche Zwecke geeignet, da sie:

- durch die Verarbeitungsfolge völlig ausgebleicht werden, insbesondere durch das Sulfit in den Entwicklerlösungen, ohne nachfolgende Wiederherstellung des Farbstoffs im photographischen Material,
- leicht zu formulieren sind, weil sie im allgemeinen wasserlöslich sind. Zum grösseren Teil weisen sie in Gelatineschichten eine kontrollierbare und geeignete Aggregation auf. Dies hat zur Folge, dass:
  - wegen des Auftretens von Absorptionsspitzen, die der aggregierten Spezies zuzuschreiben sind, das Deckungsgebiet der Farbstoffe im sichtbaren Spektrum erweitert wird und
  - die Farbstoffe eine ausgezeichnete Substantivität in den Gelatineschichten besitzen, ohne dass dabei ihre Bleichbarkeit beeinträchtigt wird.

In Fällen, wo nach der spektralen Deckung zu urteilen keine Aggregation auftritt, (siehe z.B. Beispiele K und L weiter unten), ist die Substantivität stark verringert.

Sie besitzen die Fähigkeit, anionische Farbstoffe, die an sich keine hohe Substantivität in der Gelatine zeigen, zu beizen. Eine photographische Schicht (z.B. Lichthofschutzschicht)die einen der erfindungsgemässen Farbstoffe und einen anionischen Farbstoff enthält, zeigt häufig Absorptionsmaxima, die nicht auf der Gegenwart eines der Farbstoffe allein beruhen können, da sie zwischen oder

ausserhalb der normalerweise von den Farbstoffen in Gelatine gezeigten Absorptionsmaxima liegen.

Gegenstand der vorliegenden Erfindung ist daher weiterhin photographisches Material, welches in mindestens einer Schicht einen Farbstoff der Formel (1) enthält. Die den Farbstoff enthaltende Schicht kann beispielsweise eine Antihalounterschicht, eine Antihalorückschicht oder eine Filterschicht im photographischen Material sein. Ist die Schicht eine Antihalounterschicht oder eine Filterschicht, so wird das Bindemittel für die Schicht üblicherweise Gelatine sein. Ist diese Schicht eine Antihalorückschicht, so kann diese eine Harzrückschicht sein.

Eine Antihalounterschicht mit Gelatine als Bindemittel kann ferner einen anionischen Antihalofarbstoff enthalten.

In den nachflogenden Herstellungsvorschriften werden die zur Herstellung der erfindungsgemässen Farbstoffe verwendeten Zwischenprodukte beschrieben.

Herstellungsvorschriften

(1) N-[2'-(N'-Piperidyl)-äthyl]-N-methylanilin.

Man verrührt 36,8 g (2. $10^{-1}$ Mol) N-2'-Chloräthylpiperidin mit 10 g Natriumhydroxyd in 100 ml Wasser. Man extrahiert 3mal mit je 50 ml Aether, trocknet die Extrakte und dampft ein.Der Rückstand wird 4 Stunden lang mit 21,4 g (2 . $10^{-1}$ Mol) N-Methylanilin in 25 ml 2-Methoxyäthanol unter Rückfluss erhitzt. Man destilliert etwa 20 ml Lösungsmittel ab und kühlt den Rückstand zu einem Kuchen.Dieser wird in 100 ml Wasser aufgenommen und zur Entfernung von teerartigem Material mit 100 ml Aether gewaschen. Den wässrigen Anteil versetzt man mit 10 g Natriumhydroxyd und extrahiert das sich abscheidende Oel mit 2mal je 25 ml Aether. Die Aetherextrakte werden getrocknet und zu 25,5 g braunem Oel eingedampft. Die Destillation liefert eine Fraktion von 22,3 g (51%) der Verbindung (1).(Siedepunkt 135-136°C/2 Torr).

Auf ähnliche Weise werden hergestellt:

(2) N-[2'-(Dimethylamino)-äthyl]-N-methylanilin (Siedepunkt 87-89°C/0,65 mbar)

(3) N-[2'-(Diäthylamino)-äthyl]-N-äthylanilin (Siedepunkt 119-120°C/0,52 mbar)

(4) N-[2'-(N'-Morpholino)-äthyl]-N-methylanilin (Siedepunkt 158-160°C/0,13 mbar)

(5) N-[2'-(Di-2'-propylamino)-äthyl]-N-methylanilin (Siedepunkt 116-118°C/0,13 mbar)

(6) N-[2'-(Diäthylamino)-äthyl]-N-methylanilin (Siedepunkt 130-133°C/1,95 mbar).

(Die Umsetzung lässt sich auch einstufig mit dem entsprechenden Halogenalkylaminhydrohalogenid und Anilin in Gegenwart der stöchiometrischen Menge Natriumhydroxyd durchführen).

(7) <u>N-[2'-(N'-Piperidyl)-äthyl]-N-methylanilin-4-carboxaldehyd.</u>

Man kühlt 21,8 g ($10^{-1}$ Mol) der Verbindung (1) in 20 ml Dimethylformamid im Eisbad auf eine Temperatur von 10°C T 20°C, während man im Verlauf von 1 Stunde 11 ml (2,4 . $10^{-1}$ Mol) frisches Phosphoroxychlorid zutropft. Dann wird auf dem Dampfbad erhitzt, 1 1/2 Stunden gerührt und zu einem Glas abgekühlt. Dieses löst man unter Erwärmen in 18 g Natriumhydroxyd in 140 ml Wasser. Man extrahiert mit 2mal 100 ml Dichlormethan, wäscht die organischen Extrakte mit Wasser (100 ml), trocknet und dampft ein, was eine braune Flüssigkeit liefert. Die Destillation ergibt eine Fraktion von 15,5 g (63%) der Verbindung (7). (Siedepunkt 195-198°C/0,5 Torr).

Auf ähnliche Weise werden hergestellt:

(8) N-[2'-(Dimethylamino)-äthyl]-N-methylanilin-4-carboxaldehyd (Siedepunkt 161-163°C/0,65 mbar),

(9) N-[2'-(Diäthylamino)-äthyl]-N-äthylanilin-4-carboxaldehyd (Siedepunkt 198-200°C/0,52 mbar),

(10) N-[2'-(N'-Morpholino)-äthyl]-N-methylanilin-4-carboxaldehyd (Siedepunkt 228-232°C/1,3 mbar),

(11) N-[2'-(Di-2"-propyl)-äthyl]-N-methylanilin-4-carboxaldehyd (Siedepunkt 200-202°C/1,04 mbar) und

(12) N-[2'-(Diäthylamino)-äthyl]-N-methylanilin-4-carboxaldehyd (Siedepunkt 210-212°C/0,52 mbar).

(13) N-[2'-(N'-{N'-Methylpiperidinium})-äthyl]-N-methylanilin-4-carboxaldehyd-methylsulfat

Man rührt 6,15 g (2,5 . $10^{-2}$ Mol) der Verbindung 7 und 2,4 ml (2,5 . $10^{-2}$ Mol) Dimethylsulfat in 25 ml Toluol 1 Stunde bei 50°C. Beim Abkühlen scheidet sich ein grüner harziger Feststoff aus. Dieser wird mit Aether gewaschen und durch Säulenchromatographie (Methanol/Silikagel) gereinigt, was 6,88 g (74%) gelbes Oel ergibt, das als Verbindung (13) identifiziert wird.

Auf ähnliche Weise werden hergestellt:

(14) N-[2'-(N'-{N'-Aethoxycarbonylmethylpiperidinium})-äthyl]-N-methylanilin-4-carboxaldehyd-bromid (gelbes Harz)

(15) N-[2'-(Dimethylammonium)-äthyl-]-N-methylanilin-4-carboxaldehyd-äthylsulfat (gelbes Harz)

(16) N-[2'-(N'-{N'-Methylmorpholino})-äthyl]-N-methylanilin-4-carboxaldehyd-methylsulfat (gelbes Harz)

(17) N-(2'-N'-Pyridiniumäthyl)-äthylanilin-4-carboxaldehyd-chlorid

Man erhitzt 21,15 g ($10^{-1}$ Mol) 4-(N-2-Chloräthyl-N-äthylamino)-benzaldehyd und 105 ml Pyridin 24 Stunden unter Rückfluss. Das Gemisch wird abgekühlt und mit Aether verdünnt. Das ausgefällte Produkt wird mit Aether gut gewaschen und im Vakuum getrocknet, was 27,0 g (77%) der Verbindung (17) liefert (Schmelzpunkt 132-135°C).

Auf ähnliche Weise wird hergestellt:

(18) N-(2'-Triäthylammoniumäthyl)-äthylanilin-4-carboxaldehyd-chlorid (Schmelzpunkt 236-238°C).

Die Verbindungen (7) bis (18) weisen die folgenden Strukturen auf:

(7) 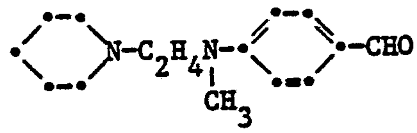

(8) 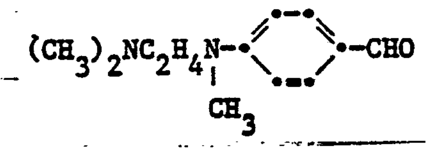

(9) 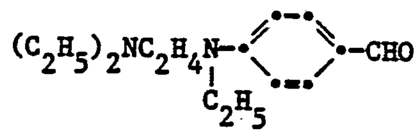

(10) 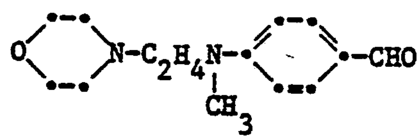

(11) 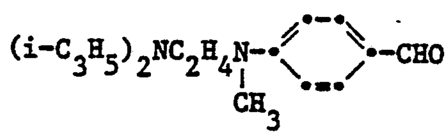

(12) 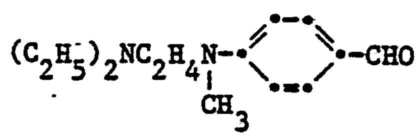

(13) 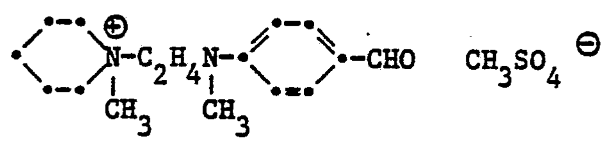

(14) 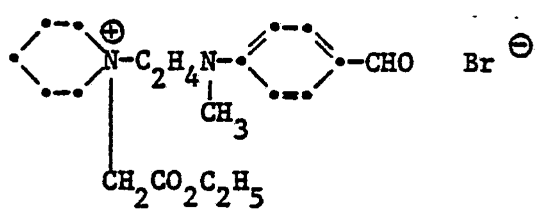

(15) 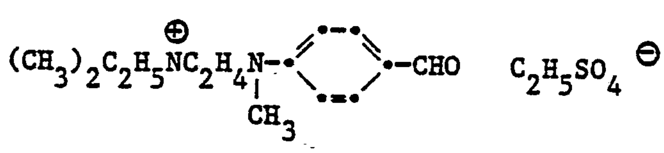

(16) 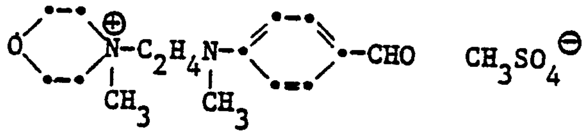

(17) 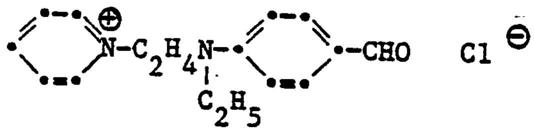

(18) 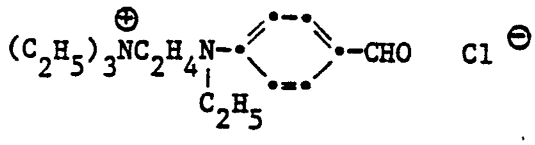

Die nachfolgenden Beispiele dienen zur Erläuterung der Erfindung .

Beispiel 1: Herstellung der erfindungsgemässen Farbstoffe:

(A) 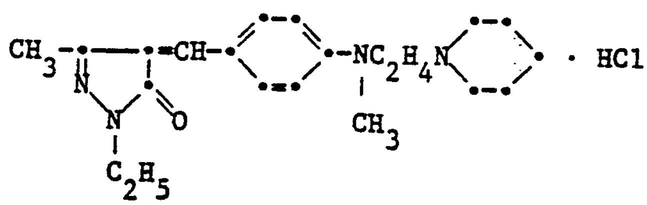

0,46 g 3-Methyl-1-phenyl-$\Delta^2$-pyrazolinon-5 und 0,62 g des Zwischenprodukts (7) werden in 2,5 ml Essigsäure 30 Minuten unter Rückfluss erhitzt. Man kühlt ab und versetzt mit reichlich Aether. Das rote Oel wird mit 5 ml Aethanol und 0,25 ml konzentrierter Salzsäure behandelt und nochmals mit reichlich Aether versetzt, was 1,01 g roten Feststoff mit λ max (MeOH) 469 nm ($\varepsilon$=2,54·$10^4$) ergibt.

Auf ähnliche Weise wird aus Verbindung (7) hergestellt:

(B) 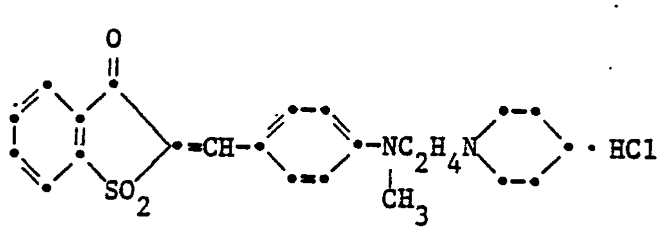

λ max ($C_2H_5OH$) 469 nm ($\varepsilon$= 3,84 . $10^4$).

Auf ähnliche Weise werden aus Verbindung (9) hergestellt:

(C) 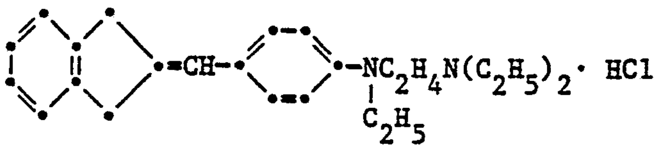

λ max ($CH_3OH$) 486 nm ($\varepsilon = 3{,}84 \cdot 10^4$)

(D) 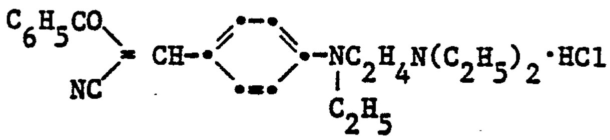

λmax ($CH_3OH$) 445 nm ($\varepsilon = 3{,}37 \cdot 10^4$)

(E) 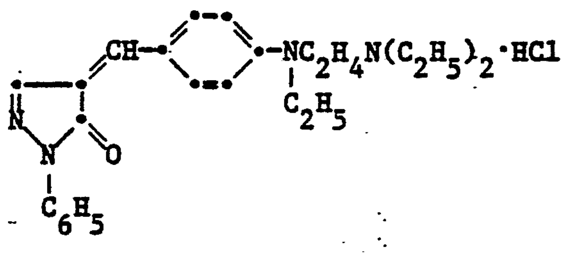

λmax ($CH_3OH$) 455 nm ($\varepsilon = 1{,}71 \cdot 10^4$)

Auf ähnliche Weise wird aus dem Zwischenprodukt (10) hergestellt:

(F)

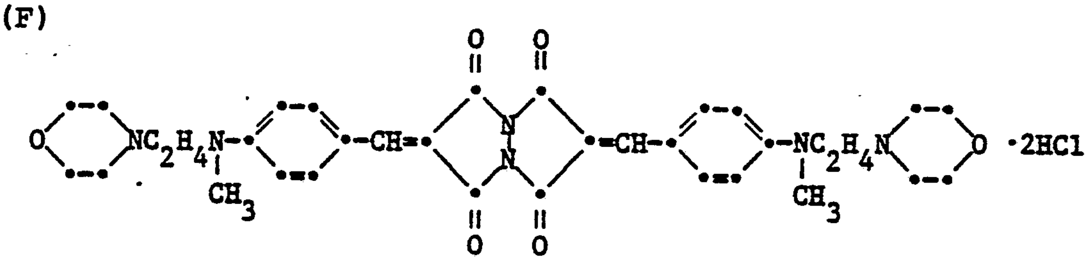

λmax ($CH_3OH$) 534, 465 nm ($\varepsilon_{534} = 3{,}47 \cdot 10^4$, $\varepsilon_{465} = 1{,}19 \cdot 10^4$)

Auf ähnliche Weise wird aus dem Zwischenprodukt (11) hergestellt:

(G) 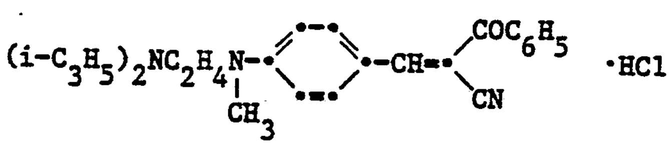

λmax ($CH_3OH$) 437 nm ($\varepsilon = 2{,}46 \cdot 10^4$).

Auf ähnliche Weise werden aus dem Zwischenprodukt (12) hergestellt:

(H) 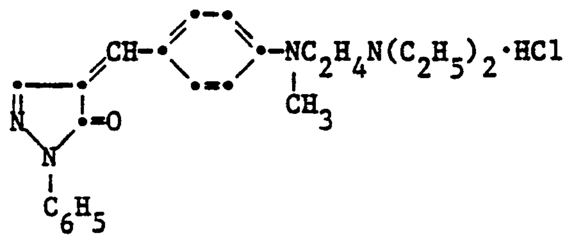

λmax ($CH_3OH$) 480 nm (ε= 3,75 . $10^4$)

(I) 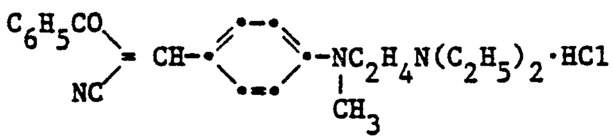

λmax ($CH_3OH$) 443 nm (ε= 4,99 . $10^4$)

(J) 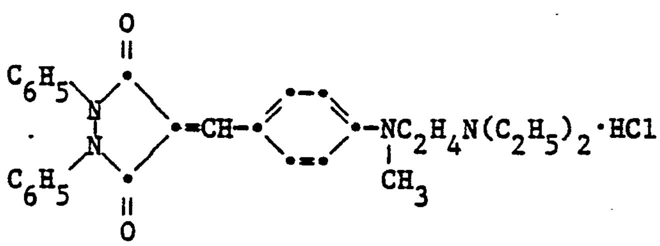

λmax ($CH_3OH$) 467 nm (ε= 7,77 . $10^4$).

(K) 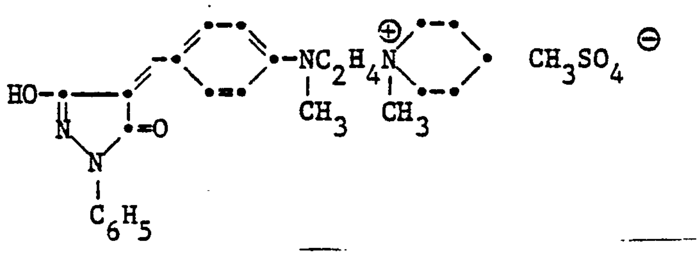

Dabei erhitzt man 0,44 g 3-Hydroxy-1-phenyl-$\Delta^2$-pyrazolinon-5 und 0,93 g Zwischenprodukt (13) in 2,5 ml Essigsäure 30 Minuten zum Rückfluss. Man kühlt ab, versetzt mit reichlich Aether, wäscht das ausgefällte Oel mit Aceton und verreibt es dann unter Aether, was 1,32 g orangefarbenen Feststoff (λmax ($CH_3OH$) 466 nm, ε = 6,84 . $10^4$) ergibt.

Auf ähnliche Weise werden aus dem Zwischenprodukt (13) hergestellt:

(L) 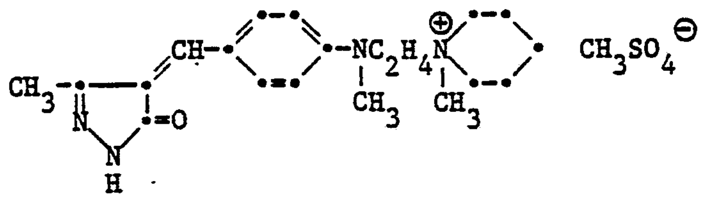

λmax ($CH_3OH$) 465 nm (ε= 6,98 . $10^3$)

(M) 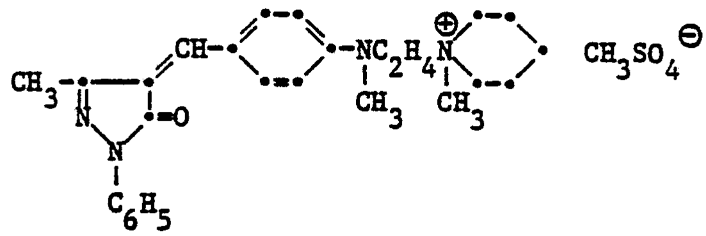

λmax ($CH_3OH$) 464 nm (ε= 3,85 . $10^4$)

Auf ähnliche Weise werden aus dem Zwischenprodukt (14) hergestellt:

(N) 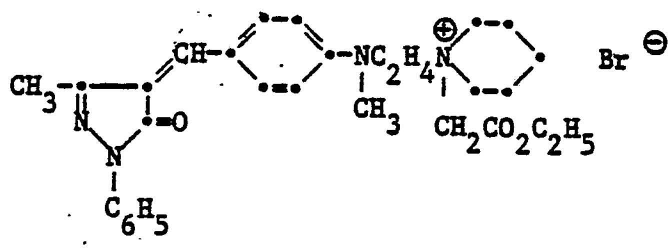

λmax ($CH_3OH$) 461 nm (ε= 2,39 . $10^4$)

(O) 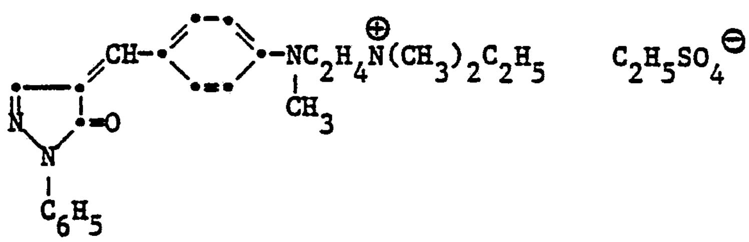

λmax ($CH_3OH$) 475 nm (ε= 2,68 . $10^4$)

Auf ähnliche Weise werden aus dem Zwischenprodukt (16) hergestellt:

(P) 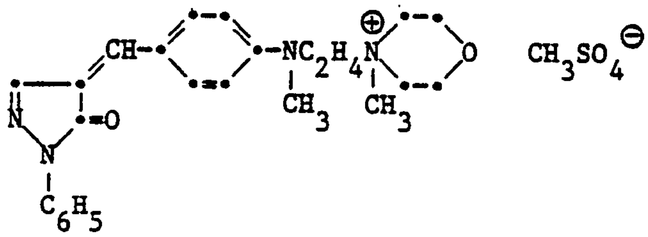

$\lambda$max ($CH_3OH$) 450 nm ($\varepsilon$ = 1,45 . $10^4$)

(Q) 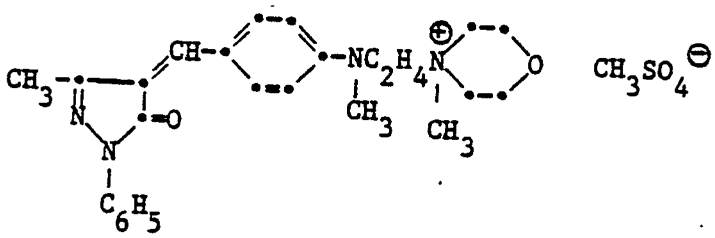

$\lambda$max ($CH_3OH$) 450 nm ($\varepsilon$ = 1,45 . $10^4$)

Auf ähnliche Weise werden aus dem Zwischenprodukt (17) hergestellt:

(R) 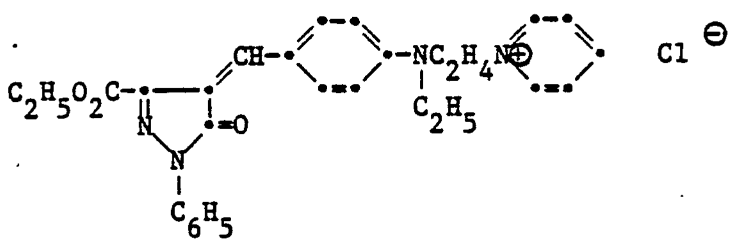

$\lambda$max ($CH_3OH$) 455 nm ($\varepsilon$ = 2,71 . $10^4$)

(S) 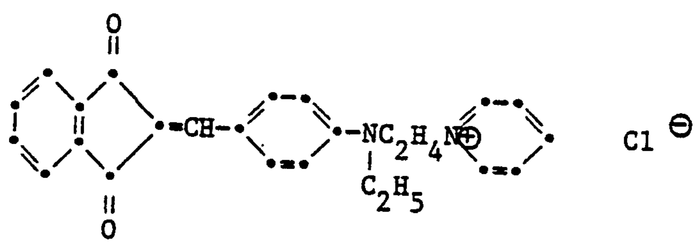

$\lambda$max ($CH_3OH$) 469 nm ($\varepsilon$ = 5,06 . $10^4$)

Beispiel 2: Anwendungsbeispiel

Gefärbte, gegossene Gelatineschichten werden wie folgt hergestellt:

Stammlösungen:

| | | |
|---|---|---|
| 6%ige Gelatine | Gelatine | 6 g |
| | Destilliertes Wasser | 94 ml |

30 Minuten bei Raumtemperatur quellen lassen und dann bei 60°C auflösen. Auf 40°C einstellen.

Farbstoff 2,5 . $10^{-3}$-molar

0,25 mMol Farbstoff in 10 ml Wasser oder 2-Aethoxyäthanol auflösen. Die Lösung auf 40°C einstellen.

Härter 1%

100 mg eines Härters vom Triazintyp in 10 ml Wasser auflösen. Die Lösung auf 40°C einstellen.

Netzmittel 5%iges neutrales anionaktives Netzmittel

Giesslösung

| | |
|---|---|
| Gelatinestammlösung | 3,5 ml |
| Destilliertes Wasser | 5,0 ml |
| Netzmittel | 0,25 ml |
| Farbstoff | 0,232 ml |
| Härter | 1,0 ml |

Bei 40°C auf mit Triacetatträger versehene Platten giessen und 5 Minuten auf einer kalten Platte (≈10°C) erstarren lassen. Bei Raumtemperatur trocknen.

| | |
|---|---|
| Gelgiessgewicht | 91,3 mg/$dm^2$ |
| mMol Farbstoff/100 g Gel | 7,76 |
| Farbstoffgiessgewicht | 0,0025 mMol/$dm^2$ |

Aus den Farbstoffen (A) bis (S) stellt man neunzehn Proben her.

Substantivitätsmessung

Man schneidet eine 5 $cm^2$ grosse Scheibe aus und misst das sichtbare Spektrum. Die Scheibe wird 30 Minuten in 7,5 ml Wasser getränkt. Dann lässt man die Scheibe trocknen und misst erneut das Spektrum.

$$\text{Substantivität} = \frac{\text{D max der getränkten Scheibe}}{\text{D max der ungetränkten Scheibe}} \cdot 100$$

Danach wird die Bleichbarkeit wie folgt gemessen:

Ein 2,5 . 7,5 cm grosser Streifen wird 2,5 Minuten in das Entwickler- und 2 Minuten in das Fixierbad eingetaucht und 10 Minuten gewässert, bevor er getrocknet wird.

$$\text{Bleichbarkeit} = 100\left(1 - \frac{\text{D max des gebleichten Streifens}}{\text{D max des nicht gebleichten Streifens}}\right)$$

Der verwendete Entwickler enthält 2 g Metol, 75 g Natriumsulfit (wasserfrei), 8 g Hydrochinon, 37,5 g Natriumcarbonat (wasserfrei) und 2 g Kaliumbromid auf 1000 ml.

Das verwendete Fixierbad enthält 82 g Ammoniumthiosulfat auf 100 ml.

Man erhält die folgenden Ergebnisse:

Tabelle 1

| Farbstoff | λmax (in Gelatine gegossen) | % Substantivität | % Bleichbarkeit |
|---|---|---|---|
| A | 415 | 98 | 100 |
| B | 469 | 43 | 99 |
| C | 485 | 61 | 96 |
| D | 445 | 57 | 96 |
| E | 467 | 94 | 100 |
| F | 477 | 80 | 100 |
| G | 444 | 50 | 100 |
| H | 462 | 67 | 100 |
| I | 441 | 44 | 100 |
| J | 471 | 81 | 100 |
| K | 459 | 46 | 100 |
| L | 461 | 43 | 100 |
| M | 421 | 89 | 100 |
| N | 448 | 66 | 100 |
| O | 465 | 46 | 100 |
| P | 466 | 57 | 98 |
| Q | 451 | 78 | 100 |
| R | 473 | 61 | 100 |
| S | 485 | 67 | 99 |

Beispiel 3: Hier wird der Beizeffekt eines erfindungsgemässen Farbstoffs gezeigt, wenn er zusammen mit einem anionischen Farbstoff vorliegt.

a) Die Stammlösungen werden wie folgt angesetzt:

Farbstoff (D) 0,25 mMol in 10 ml Wasser

Farbstoff (T) 0,25 mMol in 10 ml Wasser

(Der Farbstoff (T) ist Bis-(1-butyl-3-cyan-6-hydroxy-4-methylpyridon-2)-trimethinoxonol-triäthylaminsalz - gemäss der britischen Patentschrift 1 278 621).

Die beiden Stammlösungen werden wie folgt zum Ansetzen einer Giesslösung verwendet (die übrigen Komponenten werden wie in Beispiel 2 bereitet):

| | |
|---|---|
| Gelatinestammlösung | 3,5 ml |
| Netzmittel | 0,25 ml |
| Härter | 1,0 ml |
| Lösung des Farbstoffs D | 0,232 ml |
| Lösung des Farbstoffs T | 0,232 ml |
| Destilliertes Wasser | auf 10 ml |

Die Lösung wird wie in Beispiel 2 gegossen und verarbeitet.

b) Wie für a), ausser dass statt der Lösung des Farbstoffs (D) eine Lösung des Farbstoffs (E) (0,25 mMol in 10 ml Wasser - 0,232 ml) verwendet wird.

c) Wie für a), ausser dass der Farbstoff (T) allein gegossen wird (0,232 ml).

Die Ergebnisse sind in Tabelle 2 angeführt.

Tabelle 2

| Guss | Lichtabsorptionsmaxima in Gelatine (nm) | % Substantivität | % Gesamtbleichbarkeit |
|---|---|---|---|
| a | 440, 620 | 85(λ440)<br>100(λ620) | 100 |
| b | 480, 620 | 98(λ480)<br>86(λ620) | 100 |
| c | 608 | 44 | 99 |

Dies zeigt, dass die Substantivität des Farbstoffs (T) sowie die Substantivität des Farbstoffs (D) stark zugenommen haben.

Die Gesamtlichtabsorption der gefärbten Schicht ist stark erweitert. Die Antihaloschicht weist eine breite Absorptionsbande auf. Bei Verwendung eines Gemischs der erfindungsgemässen Farbstoffe mit einem Farbstoff nach der britischen Patentschrift 1 278 621, die beide eine unzureichende Substantivität aufweisen, wird eine für photographische Zwecke geeignete Antihaloschicht erhalten.

Ansprüche:

1. Farbstoffe der Formel

(1) 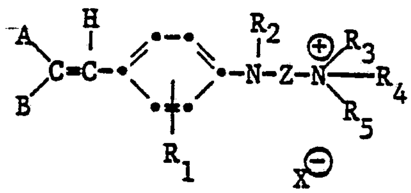 ,

worin A und B je -CN, $-COR_6$ oder $-CO_2R_7$ sind, wobei $R_6$ Aryl und $R_7$ Alkyl mit 1 bis 4 Kohlenstoffatomen bedeuten, wobei B nicht $-CO_2R_7$ oder -CN sein darf, wenn A -CN ist, oder A und B zusammen mit dem Kohlenstoffatom, an das sie gebunden sind, ein gegebenenfalls substituiertes carbocyclisches oder heterocyclisches Ringsystem bilden, $R_1$ Wasserstoff, Alkyl oder Alkoxy mit je 1 bis 4 Kohlenstoffatomen und $R_2$ gegebenenfalls substituiertes Alkyl mit 1 bis 4 Kohlenstoffatomen ist, $R_3$, $R_4$ und $R_5$ je Wasserstoff, Alkyl mit 1 bis 4 Kohlenstoffatomen, Carboxyalkyl, Alkoxycarbonylalkyl oder Aryl sind, oder zwei der Substituenten $R_3$, $R_4$ und $R_5$ oder alle drei Substituenten $R_3$, $R_4$ und $R_5$ mit dem Stickstoffatom, an die sie gebunden sind, ein Ringsystem bilden, Z ein Brückenglied der Formel $-(CHR_8)_m-(CH_2)_n-$, worin $R_8$ Wasserstoff oder Methyl, m 0 oder 1, n 1, 2 oder 3, und $X^{\ominus}$ ein Anion ist.

2. Farbstoffe nach Anspruch 1, dadurch gekennzeichnet, dass A und B mit dem Kohlenstoffatom, an das sie gebunden sind, 5- oder 6-gliedrige, gesättigte oder ungesättigte carbocyclische Ringsysteme bilden, die gegebenenfalls mit einem Benzolring kondensiert sind und die mindestens eine Ketogruppe enthalten.

3. Farbstoffe nach Anspruch 1, dadurch gekennzeichnet, dass A und B mit dem Kohlenstoffatom, an das sie gebunden sind, 5- oder 6-gliedrige, gesättigte oder ungesättigte heterocyclische Ringsysteme mit 1 oder 2 Heteroatomen

bilden, wobei die Ringsysteme gegebenenfalls mit einem Benzolring kondensiert sind sowie mindestens eine Ketogruppe aufweisen.

4. Farbstoffe nach Anspruch 1, dadurch gekennzeichnet, dass A und B mit dem Kohlenstoffatom, an das sie gebunden sind, gesättigte oder ungesättigte bicyclische Ringsysteme mit 8 bis 10 Ringatomen, von denen mindestens zwei Heteroatome sind, bilden, wobei die Ringsysteme mindestens zwei Ketogruppen aufweisen.

5. Farbstoffe nach Anspruch 1, dadurch gekennzeichnet, dass A und B mit dem Kohlenstoffatom, an das sie gebunden sind, eines der folgenden Ringsysteme darstellen:

a) 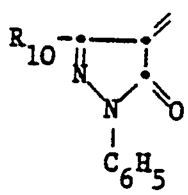

b) 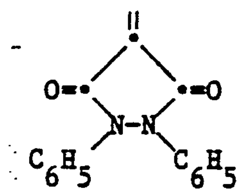

c) 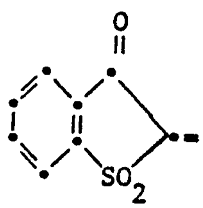

d) 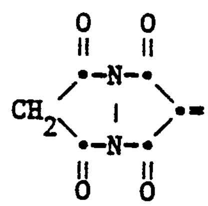

e) 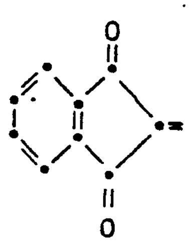

wobei $R_{10}$ in Formel a) Wasserstoff oder Methyl ist.

6. Farbstoffe nach Anspruch 1, dadurch gekennzeichnet, dass A -CN und B $-COR_6$ ist, wobei $R_6$ gegebenenfalls substituiertes Aryl bedeutet.

7. Farbstoffe nach Anspruch 6, dadurch gekennzeichnet, dass $R_6$ gegebenenfalls substituiertes Naphthyl oder Phenyl ist.

8. Farbstoffe nach Anspruch 1, dadurch gekennzeichnet, dass $R_3$, $R_4$ und $R_5$ mit dem Stickstoffatom, an das sie gebunden sind, gegebenenfalls substituierte bicyclische oder ungesättigte Ringsysteme bilden, die gegebenenfalls mindestens ein Heteroatom enthalten.

9. Farbstoffe nach Anspruch 1, dadurch gekennzeichnet, dass nur zwei der Substituenten $R_3$, $R_4$ und $R_5$ zusammen mit dem Stickstoffatom, mit dem sie verknüpft sind, gesättigte oder ungesättigte, gegebenenfalls substituierte cyclische Systeme bilden, die gegebenenfalls mindestens ein Heteroatom enthalten.

10. Farbstoffe nach Anspruch 1, dadurch gekennzeichnet, dass $R_3$, $R_4$ und $R_5$ oder nur zwei der Substituenten $R_3$, $R_4$ und $R_5$ mit dem Stickstoffatom, mit dem sie verknüpft sind, Ringsysteme der Formeln

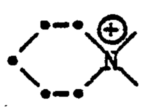 , 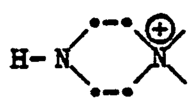 , 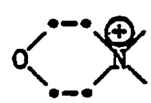 , 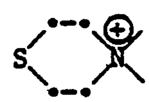 ,

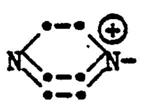 oder 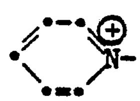

bilden.

11. Farbstoffe nach Anspruch 1, dadurch gekennzeichnet, dass $R_3$, $R_4$ und $R_5$ je Wasserstoff, Alkyl mit 1 bis 4 Kohlenstoffatomen, Carboxyalkyl oder Alkoxycarbonylalkyl mit 1 bis 4 Kohlenstoffatomen im Alkyl- oder Alkoxyrest, Naphthyl oder Phenyl sind.

12. Verfahren zur Herstellung von Farbstoffen nach Anspruch 1, dadurch gekennzeichnet, dass man eine eine aktive Methylengruppe enthaltende Verbindung der Formel $A-CH_2-B$, worin A und B die in Anspruch 1 angegebenen Bedeutungen haben, in einem polaren Lösungsmittel unter Rückfluss mit einem Benzaldehyd der allgemeinen Formel

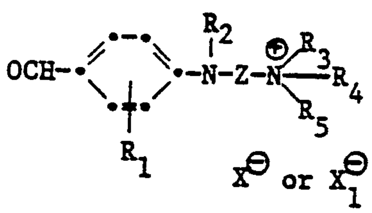

$X^{\ominus}$ or $X_1^{\ominus}$

$X^{\ominus}$ oder $X_1^{\ominus}$

kocht, worin $R_1$, $R_2$, $R_3$, $R_4$, $R_5$, Z und $X^{\ominus}$ die in Anspruch 1 angegebenen Bedeutungen haben, und $X_1^{\ominus}$ Chlor oder Brom ist.

13. Photographisches Material, dadurch gekennzeichnet, dass es in mindestens einer Schicht einen Farbstoff nach Anspruch 1 enthält.

14. Photographisches Material, dadurch gekennzeichnet, dass es eine Antihalounterschicht, Antihalorückschicht oder Filterschicht aufweist, die mindestens einen Farbstoff nach Anspruch 1 enthält.

15. Photographisches Material nach Anspruch 14, dadurch gekennzeichnet, dass die Antihalounterschicht Gelatine als Bindemittel und gegebenenfalls einen anionischen Antihalofarbstoff enthält.

16. Photographisches Material, dadurch gekennzeichnet, dass es in mindestens einer Silberhalogenidemulsionsschicht mindestens einen Farbstoff nach Anspruch 1 als Schirmfarbstoff enthält.